(19) Europäisches Patentamt European Patent Office Office européen des brevets

(11) **EP 4 289 229 B1**

(12) **EUROPEAN PATENT SPECIFICATION**

(45) Date of publication and mention of the grant of the patent:
**12.02.2025 Bulletin 2025/07**

(21) Application number: **22706934.1**

(22) Date of filing: **31.01.2022**

(51) International Patent Classification (IPC):
**H05B 7/144** (2006.01)

(52) Cooperative Patent Classification (CPC):
**H05B 7/144;** Y02P 10/20

(86) International application number:
**PCT/IT2022/050013**

(87) International publication number:
**WO 2022/168134 (11.08.2022 Gazette 2022/32)**

(54) **MELTING PLANT AND CORRESPONDING MANAGEMENT METHOD**

SCHMELZANLAGE UND ENTSPRECHENDES VERWALTUNGSVERFAHREN

INSTALLATION DE FUSION ET PROCÉDÉ DE GESTION CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.02.2021  IT 202100002078**

(43) Date of publication of application:
**13.12.2023  Bulletin 2023/50**

(73) Proprietor: **Danieli Automation S.P.A.**
**33042 Buttrio (IT)**

(72) Inventors:
• **OMETTO, Marco**
  **33037 PASIAN DI PRATO (IT)**
• **ARDESI, Alessandro**
  **33100 UDINE (IT)**
• **POLO, Andrea**
  **33048 SAN GIOVANNI AL NATISONE (IT)**
• **BUSOLINI, Loris**
  **33043 CIVIDALE DEL FRIULI (IT)**

(74) Representative: **Petraz, Gilberto Luigi et al**
**GLP S.r.l.**
**Viale Europa Unita, 171**
**33100 Udine (IT)**

(56) References cited:
EP-A1- 3 124 903    RU-C1- 2 180 923
US-A1- 2013 000 445    US-A1- 2020 393 199

**Description**

FIELD OF THE INVENTION

The present invention concerns a method for managing a melting plant which comprises, in particular but not only, an electric arc furnace for melting metal products.

The invention in particular concerns a method for managing the power that is transmitted to the electric furnace and/or to the charge material of the furnace, to guarantee improved functioning by optimizing the delivery of power by a combination of sources, for example, but not only, electrical and chemical sources, necessary to carry out a melting process.

BACKGROUND OF THE INVENTION

Melting plants are known which comprise an electric furnace, for example an electric arc furnace, used for melting a metal charge by means of an operating cycle which normally provides the following main steps:

- loading metal material inside the furnace, usually scrap, by means of baskets or by means of continuous charging systems fed with scrap and/or direct reduced iron (DRI);
- generating an electric arc, in which the electrodes are lowered toward the metal material until the electric arc is triggered between the end of the electrodes and the material to be melted;
- perforating the layer of metal material by means of the electric arc generated, with subsequent start of the melting of the charge material;
- forming the molten metal bath;
- refining the molten material to regulate the temperature of the bath and the carbon content of the steel and/or define a desired composition of the steel by adding chemical components;
- tapping the molten material present in the electric furnace, after a possible slagging operation.

The operations of charging, generating the electric arc and perforating the material can be repeated several times during a single melting cycle. For example, after a first charge of metal material into the furnace and the melting of this charge, it is possible to provide the introduction of a further charge of metal material, and the subsequent melting, before proceeding with the refining and then with the tapping.

In the case of a melting process with a continuous charge, the melting cycle described above generally provides to load a first basket into the furnace and the subsequent melting of the discharged material in order to generate a liquid pool; then, it provides the continuous introduction of the charge material to be melted in order to obtain a desired quantity to be tapped.

The melting process determines on the whole very high energy consumption and is characterized by a melting profile which must be optimized for the furnace to reach the required levels of productivity and performance.

By melting profile we substantially mean the quantity of energy, electrical and chemical, which is required so that the operational cycle can take place successfully; this profile is normally characterized by a plurality of variables such as the voltage of the power supply grid, the current, the flame delivery rate of the burners, the type of steel to be produced, the mixture of scrap used and other factors.

The melting profile is also predefined based on the size of the furnace and the electrical and chemical power installed.

Normally, an electric arc furnace is powered by an electric transformer which can vary the output voltage in a discrete manner.

The melting profiles, in general, adapt to the constraints provided by the transformer, so currently it is almost never possible to exactly meet the theoretical process requirements desired in the entire melting cycle.

This can cause a decrease in the productivity of the furnace, due to the need to adapt the available energy to all the other parameters involved, or it can cause the failure to achieve quality objectives on the casting, or also excessive production costs.

Furthermore, currently, the controlled variables for electrical and chemical energy are guided only by using a parameter that is representative of the melting state of the scrap and cannot be dynamically adapted to other process variables, nor are they adjusted on the basis of a historic record of the results obtained in the past.

It is also known that the energy available for the melting process also depends very much on the type of infrastructure for supplying the electrical and chemical energy, present in the place of installation of the melting plant. It is therefore evident that the method for managing the furnace must necessarily take this aspect into account.

Document RU 2 180 923 C1 describes a method for controlling a melting process in which an optimization occurs at discrete intervals (5-12 seconds) and not in a continuous and dynamic manner, with enormous limits on the control of the process, the parameters of which vary continuously. Furthermore, this method does not take into account the historic record of the results obtained in previous melting operations.

Document US 2013/0000445, on the other hand, describes a method for controlling the consistency of the slag in a metal melting plant, but does not explain how to optimize the delivery of both electric and chemical power, which is necessary to carry out a melting process.

There is therefore a need to perfect a melting plant and corresponding apparatus and management method, for example of an electric arc furnace, which can overcome at least one of the disadvantages of the state of the art.

One purpose of the present invention is to provide a melting plant which comprises a management apparatus able to optimize the delivery of electrical and chemical energy available at that moment.

Another purpose of the present invention is to perfect a method for managing the power supply of an electric arc furnace that allows to optimize the delivery profile of the electrical and chemical energy available at that moment.

Another purpose of the present invention is to provide a management method in which the melting profile adapts dynamically to the energy available.

Another purpose of the present invention is to provide a management method that allows, in a substantially continuous way, to optimize the overall performance of the furnace and to improve the efficiency of the melting process.

The Applicant has devised, tested and embodied the present invention to overcome the shortcomings of the state of the art and to obtain these and other purposes and advantages.

SUMMARY OF THE INVENTION

The present invention is set forth and characterized in the independent claims. The dependent claims describe other characteristics of the present invention or variants to the main inventive idea.

In accordance with the invention, a melting plant comprises an electric furnace, provided with one or more electrodes, at least chemical substances introduction means, and a management apparatus comprising at least one decoupling unit disposed between an electricity grid and the electric furnace.

The management apparatus comprises a control unit having:

- a storage module provided with at least one database in which a plurality of melting profiles are stored,
- a calculation module programmed to implement an optimization function that automatically generates a current melting profile that minimizes a cost function of electrical and chemical energy, wherein the calculation module is configured to perform a comparison between parameters relating to a determinate melting condition to be achieved in the electric furnace and corresponding operating parameters which have occurred in previous meltings, so as to select one or more base melting profiles from the database of the storage module, and
- a management module configured to receive from the calculation module the data relating to the current melting profile and to translate them into operating signals to be sent respectively to the decoupling unit between the plant and the power supply grid and to the chemical substances introduction means.

In accordance with the invention, a method for managing a melting plant is therefore provided which provides to control the electric power supply and chemical supply of an electric furnace, by means of a decoupling unit between the electric furnace and the power supply grid and by means of chemical substances introduction means.

The method provides that during a melting cycle:

- a calculation module of a control unit of a management apparatus automatically generates, through an optimization function, a current melting profile that minimizes a cost function of the electrical and chemical energy, wherein before generating the melting profile, the calculation module compares parameters relating to a determinate melting condition to be achieved with corresponding operating parameters that have occurred in previous meltings, in order to select one or more base melting profiles from the database of the storage module of the control unit, and
- a management module of the control unit receives, from the calculation module, the data relating to the current melting profile and generates respective operating signals to be sent to the decoupling unit and to the chemical substances introduction means so that they deliver the required electric power and chemical power.

BRIEF DESCRIPTION OF THE DRAWINGS

These and other aspects, characteristics and advantages of the present invention will become apparent from the following description of some embodiments, given as a non-limiting example with reference to the attached drawings wherein:

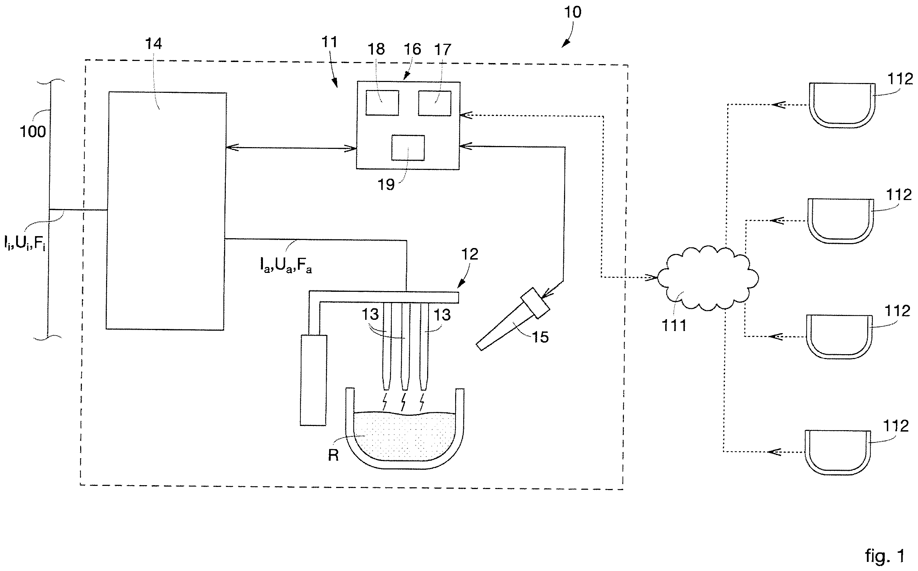

- fig. 1 is a schematic view of a melting plant in accordance with some embodiments described here.

To facilitate comprehension, the same reference numbers have been used, where possible, to identify identical common elements in the drawings. It is understood that elements and characteristics of one embodiment can be conveniently combined or incorporated into other embodiments without further clarifications.

DETAILED DESCRIPTION OF SOME EMBODIMENTS

We will now refer in detail to the possible embodiments of the invention, of which one or more examples are shown in the attached drawings, by way of a non-limiting illustration. The phraseology and terminology used here is also for the purposes of providing non-limiting examples.

The embodiments described here concern a melting plant 10 comprising an electric arc furnace 12 and an apparatus 11 for managing the power supply of the electric furnace 12.

The electric furnace 12 comprises one or more electrodes 13 which can be electrically powered to supply an electric power necessary to melt a mass of metal material R. For example, there can be two, three, or more than three electrodes 13.

The apparatus 11 is connected to an electricity grid 100 supplying alternating voltage and current which can be, for example, three-phase.

The electricity grid 100, as a function of the site of installation of the plant 10, is characterized by its own mains electric quantities such as a mains current $I_i$ and a mains voltage $U_i$, which are suitably supplied to the electrodes 13, by means of the apparatus 11, at a mains frequency $F_i$.

The apparatus 11 comprises a decoupling unit 14 operatively disposed between the electricity grid 100 and the electric furnace 12. The decoupling unit 14 is configured to decouple the mains electric quantities ($I_i$, $U_i$, $F_i$) from electric power supply quantities of the electrodes 13, which are an arc current $I_a$ and an arc voltage $U_a$, both supplied at an arc supply frequency $F_a$.

The decoupling unit 14 allows to perform the regulation of at least one mains electric quantity ($I_i$, $U_i$, $F_i$) in order to obtain a desired electric power supply quantity ($I_a$, $U_a$, $F_a$).

The decoupling unit 14 comprises a modular converter device configured to convert the mains current $I_i$ and the mains voltage $U_i$ to values of the arc current $I_a$ and arc voltage $U_a$ for powering the electrodes 13.

The modular converter device comprises a plurality of modules, each provided at least with rectifying circuits, intermediate circuits and inverter circuits as described, for example, in the Applicant's patent EP 3 124 903 B1.

The decoupling unit 14 allows to control the arc current $I_a$, the arc voltage $U_a$ and the arc power supply frequency $F_a$ independently and continuously with respect to the mains current $I_i$, the mains voltage $U_i$ and the mains frequency $F_i$. The possibility of continuously controlling these electric power supply quantities allows to have a more precise control of the melting process at any time.

The electric power delivered by the electrodes 13 is adjusted by acting on the arc current $I_a$, on the arc voltage $U_a$ and on the arc supply frequency $F_a$. Preferably, the regulating action occurs by acting on the frequency parameter.

In possible embodiments, the decoupling unit 14 can comprise a multi-tap transformer provided with a plurality of transformation ratios which can be selectively set in relation to a desired electric melting profile. In this case, the arc current $I_a$ and the arc voltage $U_a$ are controlled discreetly. In the case of a multi-tap transformer, it is not possible to act on the frequency parameter.

The electric furnace 12 comprises chemical substances introduction means, indicated as a whole with the reference number 15, configured to deliver, during use and according to the specific step of the melting cycle, a desired chemical power necessary to reach the raw chemistry desired for the production of a particular steel.

The chemical substances introduction means 15 can be, for example, burners, lances, injectors of oxygen, coal and other additives to be loaded inside the electric furnace 12.

The chemical substances introduction means 15 are characterized by chemical supply quantities which comprise at least one oxygen stream $Q_{O2}$, one fuel stream $Q_{fuel}$, one carbon stream $Q_c$ and one lime stream $Q_{lime}$. Other chemical supply quantities are possible and essentially depend on the chemical reactions that have to take place inside the electric furnace 12.

The management apparatus 11 comprises a control unit 16 operatively associated with the decoupling unit 14 and the chemical substances introduction means 15 to respectively manage the delivery of the electric power and the chemical power required.

The electric and chemical supply to the electric furnace 12 is managed on the basis of a melting profile MP which is characterized by the sum of the electric power and the chemical power required during the steps of the melting cycle.

The melting profile MP depends on the process and construction parameters A of the electric furnace 12. For example, the parameters A can comprise dimensional characteristics of the electric furnace 12 - for example shape, containing capacity - and chemical composition of the mix of metal material R introduced to produce a desired type of steel. The melting profile MP can also depend on the type and size of the pieces of the metal material R used, on its shape and on the modalities, continuous or discontinuous, with which it is introduced into the electric furnace 12. The melting profile MP can also depend on the typology of chemical substances introduction means 15.

The melting profile MP can be represented as a curve that varies as a function of the process time or of the steps of the melting process. For example, in a charging step or in a refining step, the melting profile MP could be characterized solely by the electric power or solely by the chemical power, while in a melting step it could be characterized by a combination of electric power and chemical power. For this reason, the melting profile MP can be defined, instant by instant, by the sum of an electric melting profile and a chemical melting profile.

The electric power supply quantities that can be controlled during the process in order to follow a desired electric melting profile are the arc current Ia, the arc voltage Ua and the electric power supply frequency Fa.

Some of the chemical supply quantities that can be controlled during the process in order to follow a desired chemical melting profile are an oxygen stream QO2, a fuel stream Qfuel, a carbon stream Qc and a lime stream Qlime.

The window to control these quantities depends on existing electrical and chemical constraints, as well as on the availability and mode of delivery of the electrical energy and chemical energy, respectively.

The electrical constraints can be, for example, a nominal power, a maximum output voltage and a maximum output current of the modular converter device, an electric arc resistance or other.

The chemical constraints can be, for example, a nominal power or a nominal flow rate of fuel injected, a limit ratio of injected oxygen/carbon, a limit ratio of injected oxygen/fuel.

According to some embodiments, the control unit 16 comprises a storage module 17 which has a database in which a plurality of melting profiles MP of the electric furnace 12 are stored.

In fact, at each melting operation it is possible to record the data at least of the melting profile MP and of the type of steel produced. Advantageously, the data of the corresponding electric power supply quantities and of the chemical supply quantities which define the melting profile MP are also recorded.

The storage module 17 therefore offers a history of melting profiles MP of the electric furnace 12.

According to one possible embodiment, the control unit 16 is connected to a cloud storage device 111 on which a plurality of melting profiles MP of other electric furnaces 112, which are part of other melting plants distinct from the melting plant 10, are stored.

The control unit 16 also comprises a calculation module 18 configured to perform a comparison between the parameters A relating to a determinate melting condition to be achieved in the electric furnace 12 and corresponding operating parameters which have occurred in previous meltings, in the same electric furnace 12 or in other electric furnaces 112, so as to select one or more optimal melting profiles MP which can possibly be combined to obtain a base melting profile MP.

The base melting profile MP is used, at least initially, as a guide for the melting to be achieved. By monitoring, step by step, the variation of the different controlled parameters A, it is possible to verify whether the current melting profile MP is being adhered to or not and, in the latter case, realign it with appropriate modifications.

In the event that the base melting profile MP relates to one of the other electric furnaces 112, it is necessary that these have similar characteristics in terms of sizes, mixture of scrap R and chemical substances introduction means.

The greater the number of acquired/monitored meltings, the more data there will be to feed algorithms based on this data able to define the base melting profile MP. The greater the amount of data, the greater the effectiveness and performance of the electric furnace 12.

According to some embodiments, the calculation module 18 is programmed to implement an optimization function APG which automatically generates a melting profile MP that is dynamic, in its electrical and chemical component, and minimizes a cost function CF of the electrical and chemical energy. The optimization function APG is configured to select, by analyzing the signal of the electric quantities, the "best" current and frequency combinations in each melting step of the process, that is, the current and frequency combinations that guarantee the greatest stability of the arc (for example, minimum standard deviation, minimum total harmonic deviation) and therefore minimize the so-called Power On Time "PON". Minimizing the PON means minimizing thermal losses.

It is therefore possible to impose current and active power targets on the secondary of the decoupling unit 14 such that the optimization function APG selects the best current and frequency combination, for example to minimize PON or losses.

Furthermore, in the event that there is a reduced power available from the electricity grid 100, for example in certain time slots, it is possible to integrate the missing electric power by delivering, through the chemical substances introduction means 15, the necessary chemical power, deriving from a suitable active monitoring.

The cost function CF can be defined on the basis of different parameters that can be chosen through machine learning techniques that are able to reduce the dimensionality of the problem to a limited number of variables.

The parameters that define the cost function can be different depending on the step in which the ongoing process is, therefore the cost function will take, on each occasion, a different form.

The cost function CF to be minimized is defined as a function of the electric power supply and chemical supply quantities involved in the process.

For example, the cost function CF can be defined in relation to the electric power supply quantities and the chemical supply quantities according to the relation:

$$CF = f\,(Ia,\ Ua,\ Fa;\ QO2,\ QFuel,\ Qc,\ Qlime)$$

For example, by minimizing the cost function CF it is possible to implement one of the following management strategies, or a combination thereof:

1) minimize the power required over time;
2) minimize the consumption of electrical energy;
3) minimize the wear of the electrodes 13.

The optimization function APG is configured to generate the melting profile MP which minimizes the cost function CF taking into account the constraints of the electrical components of the plant 10 and the constraints of the chemical components of the plant 10. The techniques that can be used to optimize the cost function are, for example, genetic algorithms or dual optimization methods, taking into account the type of constraints.

According to some embodiments, the control unit 16 comprises a management module 19 configured to receive the melting profile MP, in its electrical and chemical components, from the calculation module 18 and to translate them into operating signals to be sent respectively to the decoupling unit 14 and to the chemical substances introduction means 15 so that they deliver the optimized quantity of energy.

The management module 19 is also configured to receive the data relating to the current melting profile MP and to record them on the storage module 17 in order to continuously update the database.

The management apparatus 11 described heretofore is used to put into practice a method for managing a melting plant 10 in which at least the following steps occur:

- a step of loading, possibly in several moments, solid metal material R into the melting plant 10, in particular inside the electric furnace 12,
- a step of melting the solid metal material R to obtain molten material,
- a step of refining the molten material.

The charging, melting and refining steps are characterized both in terms of time, for example the average duration of each step, and also in terms of quantities, for example the power required to complete each step within the timeframe and with the same result necessary to consider their completion suitable, from an optimal melting profile MP.

The optimal melting profiles MP are those which, with the same initial conditions, for example parameters A, and aimed at achieving a precise result, for example a particular steel grade, require less consumption and time and therefore lower costs. On the contrary, the least suitable melting profiles MP are those that exceed timeframes, costs or do not reach the desired target.

Once the melting program has been established, before the charging step of each melting cycle it is provided that the calculation module 18 of the control unit 16 compares the process parameters A of the melting to be carried out with the process parameters of previous meltings which are loaded into the database within the storage module 17.

Possibly, the database present in the storage unit 17 can be updated or have access to the cloud storage device 111 which contains information on meltings of other furnaces 112.

Once the most similar previous meltings have been defined, the calculation module 18 extracts the corresponding melting profiles MP and possibly combines them in order to obtain a melting profile MP which, in its electrical and chemical component, is a base that will be followed, at least at the beginning, to implement the melting process.

Once the melting profile MP has been determined, the calculation module 18 dynamically adjusts the current melting profile MP, in its electrical and chemical components, on the basis of the optimization function APG, with the aim of maximizing the overall efficiency of the melting process, that is, minimizing the cost function CF.

The function APG is used to continuously optimize and generate both the electric melting profile and also the chemical melting profile.

The method provides to vary the electric and chemical melting profile MP in an optimized way according to the specific step of the process.

It is clear that modifications may be made to the method for managing an electric arc furnace as described heretofore, without departing from the field and scope of the present invention as defined by the claims.

In the following claims, the sole purpose of the references in brackets is to facilitate reading and they must not be considered as restrictive factors with regard to the field of protection claimed in the specific claims.

**Claims**

1. Melting plant (10) comprising an electric furnace (12), provided with one or more electrodes (13) and chemical substances introduction means (15), and a management apparatus (11) comprising a decoupling unit (14) disposed between an electricity grid (100) and said electric furnace (12), wherein said management apparatus (11) comprises a control unit (16) that has:

   - a calculation module (18) programmed to implement an optimization function that automatically generates a current melting profile that minimizes a cost function of electrical and chemical energy, and
   - a management module (19) configured to receive from said calculation module (18) the data relating to said melting profile and to translate them into operating signals to be sent respectively to said decoupling unit (14) and to said chemical substances introduction means (15),

   **characterized in that** said control unit (16) that has a storage module (17) which has a database in which a plurality of melting profiles are stored, wherein said calculation module (18) is configured to perform a comparison between parameters relating to a determinate melting condition to be achieved in said electric furnace (12) and corresponding operating parameters which have occurred in previous meltings, so as to select one or more base melting profiles from the database of said storage module (17).

2. Plant as in claim 1, **characterized in that** said cost function depends at least on electric power supply quantities and/or chemical supply quantities.

3. Plant as in claim 2, **characterized in that** said electric power supply quantities are an arc current (Ia), an arc voltage (Ua) and an arc supply frequency (Fa), **and in that** said chemical supply quantities comprise at least one oxygen stream, one fuel stream, one carbon stream and one lime stream.

4. Plant as in any claim hereinbefore, **characterized in that** said management module (19) is also configured to receive data relating to said current melting profile and to record them on said storage module (17) in order to continuously update the database.

5. Method for managing a melting plant (10) which provides to control the electric power and chemical supply of an electric furnace (12) by means of a decoupling unit (14) and chemical substances introduction means (15), wherein during a melting cycle:

   - a calculation module (18) of a control unit (16) of a management apparatus (11) automatically generates, through an optimization function, a current melting profile that minimizes a cost function of the electrical and chemical energy, wherein before generating said melting profile, said calculation module (18) compares parameters relating to a determinate melting condition to be achieved with corresponding operating parameters that have occurred in previous meltings in order to select one or more base melting profiles from a database of a storage module (17) of said control unit (16), and
   - a management module (19) of said control unit (16) receives from said calculation module (18) the data relating to said melting profile and generates respective operating signals to be sent to said decoupling unit (14) and to said chemical substances introduction means (15) so that they deliver the required electric power and chemical power.

6. Method as in claim 5, **characterized in that** by minimizing said cost function one or more of either of the following are minimized: a power required over time, a consumption of electrical energy or a wear of the electrodes (13) of said electric furnace (12).

7. Method as in claim 5 or 6, **characterized in that** said melting cycle provides a charging step, possibly in several moments, a melting step and a refining step, wherein said method provides to vary the electric and chemical melting profile in an optimized manner according to the specific step of the cycle.

**Patentansprüche**

1. Schmelzanlage (10) mit einem elektrischen Ofen (12), der mit einer oder mehreren Elektroden (13) und einer Einleiteinrichtung (15) für chemische Substanzen versehen ist, und einer Handhabungsvorrichtung (11) mit einer Entkupplungseinheit (14), die zwischen einem Elektrizitätsgitter (100) und dem elektrischen Ofen (12) angeordnet ist, wobei die Handhabungsvorrichtung (11) eine Steuereinheit (16) aufweist, die Folgendes hat:

- ein Berechnungsmodul (18), das so programmiert ist, dass es eine Optimierungsfunktion ausführt, die automatisch ein gegenwärtiges Schmelzprofil erzeugt, das eine Kostenfunktion von elektrischer und chemischer Energie minimiert, und
- ein Handhabungsmodul (19), das so aufgebaut ist, dass es von dem Berechnungsmodul (18) die Daten empfängt, die sich auf das Schmelzprofil beziehen, und es diese in Betriebssignale übersetzt, die jeweils zu der Entkupplungseinheit (14) und zu der Einleiteinrichtung (15) für chemische Substanzen zu senden sind,

**dadurch gekennzeichnet, dass**
die Steuereinheit (16) ein Speichermodul (17) hat, das eine Datenbank hat, in der eine Vielzahl an Schmelzprofilen gespeichert sind, wobei das Berechnungsmodul (18) so aufgebaut ist, dass es einen Vergleich zwischen Parametern, die sich auf eine Bestimmungsschmelzbedingung beziehen, die in dem elektrischen Ofen (12) zu erzielen sind, und entsprechenden Betriebsparametern, die in vorherigen Schmelzvorgängen aufgetreten sind, so ausführt, dass ein oder mehrere Basisschmelzprofile aus der Datenbank des Speichermoduls (17) gewählt werden.

2. Anlage gemäß Anspruch 1, **dadurch gekennzeichnet, dass** die Kostenfunktion zumindest von den Liefermengen für elektrische Energie und/oder Liefermengen von Chemikalien abhängt.

3. Anlage gemäß Anspruch 2, **dadurch gekennzeichnet, dass** die Liefermengen von elektrischer Energie eine Lichtbogenstromstärke (Ia), eine Lichtbogenspannung (Ua) und eine Lichtbogenlieferfrequenz (Fa) sind, und dass die Liefermengen an Chemikalien zumindest einen Sauerstoffstrom, einen Brennstoffstrom, einen Kohlenstoffstrom und einen Kalkstrom aufweisen.

4. Anlage gemäß einem der vorherigen Ansprüche, **dadurch gekennzeichnet, dass** das Handhabungsmodul (19) außerdem so aufgebaut ist, dass es Daten empfängt, die sich auf das gegenwärtige Schmelzprofil beziehen, und sie in dem Speichermodul (17) aufzeichnet, um die Datenbank kontinuierlich auf den neuesten Stand zu halten.

5. Verfahren zum Handhaben einer Schmelzanlage (10), das vorsieht, die Belieferung von elektrischer Energie und Chemikalien eines elektrischen Ofens (12) mittels einer Entkupplungseinheit (14) und einer Einleiteinrichtung (15) für chemische Substanzen zu steuern, wobei während eines Schmelzzyklus:

- ein Berechnungsmodul (18) einer Steuereinheit (16) einer Handhabungsvorrichtung (11) durch eine Optimierungsfunktion automatisch ein gegenwärtiges Schmelzprofil generiert, das eine Kostenfunktion der elektrischen und chemischen Energie minimiert, wobei vor dem Erzeugen des Schmelzprofils das Berechnungsmodul (18) Parameter, die sich auf eine Bestimmungsschmelzbedingung beziehen, mit entsprechenden Betriebsparametern vergleicht, die bei vorherigen Schmelzvorgängen aufgetreten sind, um ein oder mehrere Basisschmelzprofile aus einer Datenbank eines Speichermoduls (17) der Steuereinheit (16) auszuwählen, und
- ein Handhabungsmodul (19) der Steuereinheit (16) von dem Berechnungsmodul (18) die Daten empfängt, die sich auf das Schmelzprofil beziehen, und jeweilige Betriebssignale generiert, die zu der Entkupplungseinheit (14) und zu der Einleiteinrichtung (15) für chemische Substanzen zu senden sind, sodass diese die erforderliche elektrische Energie und chemische Energie liefern.

6. Verfahren gemäß Anspruch 5, **dadurch gekennzeichnet, dass** durch Minimieren der Kostenfunktion eines oder mehrere von jedem der Folgenden minimiert werden: einen über die Zeit benötigten Strom, ein Verbrauch von elektrischer Energie oder ein Verschleiß der Elektroden (13) des elektrischen Ofens (12).

7. Verfahren gemäß Anspruch 5 oder 6, **dadurch gekennzeichnet, dass** der Schmelzzyklus einen Beschickungsschritt, möglicherweise in mehreren Momenten, einen Schmelzschritt und einen Veredelungsschritt vorsieht, wobei das Verfahren vorsieht, das elektrische und chemische Schmelzprofil in einer optimierten Weise gemäß dem spezifischen Schritt des Zyklus zu variieren.

**Revendications**

1. Installation de fusion (10) comprenant un four électrique (12), pourvu d'une ou de plusieurs électrodes (13) et de moyens d'introduction de substances chimiques (15), et un appareil de gestion (11) comprenant une unité de découplage (14) disposée entre un réseau électrique (100) et ledit four électrique (12), dans lequel ledit appareil de gestion (11) comprend une unité de commande (16) qui présente :

- un module de calcul (18) programmé afin de mettre en œuvre une fonction d'optimisation qui génère automatiquement un profil de fusion courant qui minimise une fonction de coût d'énergie électrique et chimique, et
- un module de gestion (19) configuré pour recevoir à partir dudit module de calcul (18) les données relatives audit profil de fusion et pour les traduire en signaux de fonctionnement à envoyer respectivement à ladite unité de découplage (14) et auxdits moyens d'introduction de substances chimiques (15), **caractérisée en ce que** ladite unité de commande (16) présente un module de stockage (17) qui présente une base de données dans laquelle une pluralité de profils de fusion sont stockés, dans laquelle ledit module de calcul (18) est configuré pour effectuer une comparaison entre des paramètres relatifs à une condition de fusion déterminée à atteindre dans ledit four électrique (12) et des paramètres de fonctionnement correspondants qui se sont produits lors de fusions précédentes, de manière à sélectionner un ou plusieurs profils de fusion de base à partir de la base de données dudit module de stockage (17).

2. Installation selon la revendication 1, **caractérisée en ce que** ladite fonction de coût dépend au moins des quantités d'alimentation électrique et/ou des quantités d'alimentation chimique.

3. Installation selon la revendication 2, **caractérisée en ce que** lesdites quantités d'alimentation électrique sont un courant d'arc (Ia), une tension d'arc (Ua) et une fréquence d'alimentation d'arc (Fa), **et en ce que** lesdites quantités d'alimentation chimique comprennent au moins un flux d'oxygène, un flux de combustible, un flux de carbone et un flux de chaux.

4. Installation selon l'une quelconque des revendications précédentes, **caractérisée en ce que** ledit module de gestion (19) est également configuré pour recevoir des données relatives audit profil de fusion de courant et pour les enregistrer sur ledit module de stockage (17) afin de mettre à jour en continu la base de données.

5. Procédé de gestion d'une installation de fusion (10) qui prévoit de commander l'alimentation électrique et chimique d'un four électrique (12) au moyen d'une unité de découplage (14) et de moyens d'introduction de substances chimiques (15), dans lequel au cours d'un cycle de fusion :

- un module de calcul (18) d'une unité de commande (16) d'un appareil de gestion (11) génère automatiquement, par le biais d'une fonction d'optimisation, un profil de fusion courant qui minimise une fonction de coût de l'énergie électrique et chimique, dans lequel avant de générer ledit profil de fusion, ledit module de calcul (18) compare des paramètres relatifs à une condition de fusion déterminée à atteindre avec des paramètres de fonctionnement correspondants qui se sont produits lors de fusions précédentes afin de sélectionner un ou plusieurs profils de fusion de base à partir d'une base de données d'un module de stockage (17) de ladite unité de commande (16), et
- un module de gestion (19) de ladite unité de commande (16) reçoit à partir dudit module de calcul (18) les données relatives audit profil de fusion et génère des signaux de fonctionnement respectifs à envoyer à ladite unité de découplage (14) et auxdits moyens d'introduction de substances chimiques (15) afin qu'ils délivrent l'alimentation électrique et l'alimentation chimique requises.

6. Procédé selon la revendication 5, **caractérisé en ce qu'en** minimisant ladite fonction de coût, un ou plusieurs des éléments suivants sont minimisés : une alimentation requise dans le temps, une consommation d'énergie électrique ou une usure des électrodes (13) dudit four électrique (12).

7. Procédé selon la revendication 5 ou 6, **caractérisé en ce que** ledit cycle de fusion prévoit une étape de chargement, facultativement en plusieurs moments, une étape de fusion et une étape d'affinage, dans lequel ledit procédé prévoit de faire varier le profil de fusion électrique et chimique de manière optimisée en fonction de l'étape spécifique du cycle.

fig. 1

112
112
112
112

111

10

15

12

13
13

R

16 17
18
19

11

14

$I_a, U_a, F_a$

100

$I_i, U_i, F_i$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2180923 C1
- US 20130000445 A

- EP 3124903 B1